(19) Europäisches Patentamt
European Patent Office
Office européen des brevets

(11) **EP 2 242 903 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **09707954.5**

(22) Anmeldetag: **06.02.2009**

(51) Int Cl.:
*E21C 41/26* (2006.01)     *E02F 9/20* (2006.01)
*E01C 23/088* (2006.01)

(86) Internationale Anmeldenummer:
**PCT/EP2009/051383**

(87) Internationale Veröffentlichungsnummer:
**WO 2009/098294 (13.08.2009 Gazette 2009/33)**

(54) **FRÄSMASCHINE, INSBESONDERE SURFACE MINER, SOWIE VERFAHREN ZUM ABBAUEN VON FRÄSGUT EINER TAGEBAUFLÄCHE**

MILLING MACHINE, IN PARTICULAR SURFACE MINER, AND METHOD FOR MINING MILLED MATERIAL OF AN OPEN CAST SURFACE

MACHINE À FRAISER, NOTAMMENT POUR MINE À CIEL OUVERT, ET PROCÉDÉ DE FORAGE EN MINE À CIEL OUVERT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.02.2008 DE 102008008260**

(43) Veröffentlichungstag der Anmeldung:
**27.10.2010 Patentblatt 2010/43**

(60) Teilanmeldung:
**13185644.5 / 2 679 767**

(73) Patentinhaber: Wirtgen GmbH
**53578 Windhagen (DE)**

(72) Erfinder:
• **VON SCHÖNEBECK, Winfried**
**53560 Vettelschoss (DE)**
• **WAGNER, Stefan**
**53604 Bad Honnef (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
DE-A1- 19 628 420     US-A- 4 863 009
US-B1- 6 336 684

• DATABASE COMPENDEX [Online] ENGINEERING INFORMATION, INC., NEW YORK, NY, US; 1986, WOLSKI JAN K: "OPTIMIZATION OF BUCKET WHEEL EXCAVATOR AND PIT PARAMETERS IN APPLICATION TO OVERBURDEN STRIPPING." XP002538700 Database accession no. EIX87110183729 & 1986 A. A. BALKEMA, 1986, Seiten 43-55,
• DATABASE COMPENDEX [Online] ENGINEERING INFORMATION, INC., NEW YORK, NY, US; Oktober 1994 (1994-10), GOVE D ET AL: "Optimizing truck-loader matching" XP002538699 Database accession no. EIX95112431085 & MINING ENGINEERING 1994 OCT SOC FOR MINING, METALLURGY & EXPLORATION INC, Bd. 46, Nr. 10, Oktober 1994 (1994-10), Seiten 1179-1185,
• ?: "Asphalt Milling 2", YOUTUBE, 3 May 2007 (2007-05-03), page 1, XP054976205,

EP 2 242 903 B1

**Beschreibung**

Die Erfindung betrifft ein Verfahren nach Anspruch 1, sowie eine Fräsmaschine nach Anspruch 8.

Das Abbauen von festen Erdstoffen in Form von Fräsgut ist gegenüber dem Bohren und Sprengen im Berg-, Erd- und Felsbau von großem Vorteil, da es erheblich wirtschaftlicher ausgeführt werden kann.

Die Fräsmaschine, üblicherweise als Surface Miner bezeichnet, kann das abgebaute Material so kleinstückig brechen, dass es ohne oder mit nur geringer Nachbehandlung weiterverarbeitet werden kann. Das von einer Fräswalze abgearbeitete Material wird über Förderbänder auf einen neben der Fräsmaschine fahrenden Lastkraftwagen abgeladen. Dabei wird das Fräsgut geschnitten, zerkleinert und letztendlich verladen. Das Dokument US 3,049,817 offenbart ein solches Verfahren. Das Dokument "Optimizing truck-loader matching" (Compendex EIX95112431085) offenbart ein Optimierungsverfahren bei Tagebau.

Ein bekanntes Verfahren sieht vor, die Bodenoberfläche einer Tagebaufläche entlang einer vorgegebenen Frässpur vorgegebener Länge zu fräsen. Hierbei wird der Fräsvorgang hinsichtlich Frästiefe und Fräsgeschwindigkeit entsprechend der Maschinenleistung und der Art des Fräsgutes optimiert.

Das Fräsgut wird über eine Fördereinrichtung zu mindestens einem Behälter eines neben der Fräsmaschine mitfahrenden Lastkraftwagens mit einem vorgegebenen maximalen Ladevolumen je Ladung transportiert. Ist der Lastkraftwagen vollständig beladen, wird dieser durch einen unbeladenen Lastkraftwagen ersetzt.

Am Ende der Frässpur wendet die Fräsmaschine, so dass eine benachbarte Frässpur abgearbeitet werden kann. Nachteilig ist dabei, dass am Ende der Frässpur der Lastkraftwagen nicht vollständig beladen sein kann, so dass entweder das Fahrzeug nur teilweise beladen das Fräsgut abtransportieren muss oder den Wendevorgang abwarten muss, wobei dann bei dem Wechsel des nächsten Lastkraftwagens der Arbeitsprozess erneut unterbrochen werden muss, bis die Lastkraftwagen ausgetauscht worden sind. Um die Betriebsunterbrechungen zu minimieren, ist es auch bekannt, Lastkraftwagenzüge zu verwenden, die mit einem oder mehreren Anhängern versehen sind. Bei derartigen Lastkraftwagenzügen besteht allerdings erst recht das Problem, dass am Ende einer Frässpur der LKW-Zug nicht vollständig beladen ist. Da bei einem derartigen Lastkraftwagen ein Wendemanöver nicht ausführbar ist, besteht dort erst recht das Problem, dass der Lastwagenzug nicht vollständig beladen werden kann.

Ein weiteres Problem besteht darin, den Behälter eines Lastkraftwagens gleichmäßig zu beladen, um das Behältervolumen maximal ausnutzen zu können.

Der Erfindung liegt daher die Aufgabe zugrunde, ein Verfahren zum Fräsen einer Tagebaufläche anzugeben, dass wirtschaftlicher durchgeführt werden kann.

Zur Lösung dieser Aufgabe dienen die Merkmale der Ansprüche 1und 8.

Hierzu ist entsprechend dem Verfahren erfindungsgemäß vorgesehen,

- das Berechnen des sich über die Länge der aktuellen Frässpur ergebenden maximalen Gesamt-Ladevolumens in Abhängigkeit der aktuellen effektiven Arbeitsbreite und einer in Bezug auf eine vorgegebene, vorzugsweise maximale Fräsleistung optimierten Frästiefe,
- das Berechnen der Anzahl der für das maximale Gesamtladevolumen einer Frässpur erforderlichen Lastkraftwagen-Ladungen,
- das Festlegen eines effektiven Gesamt-Ladevolumens der aktuellen Frässpur, das sich aus dem Volumen der nächstliegenden ganzzahligen Anzahl von Ladungen ergibt, und
- das Anpassen des einstellbaren Gesamt-Fräsvolumens der Fräsmaschine über die Länge der Frässpur an das effektive Gesamt-Ladevolumen, das eine ganzzahlige Anzahl von Ladungen ergibt.

Die Erfindung ermöglicht es, den Fräsvorgang in der Weise zu optimieren, dass am Ende einer aktuellen Frässpur auch der oder die Behälter eines Lastkraftwagens vollständig gefüllt ist, so dass die Fahrten der Lastkraftwagen oder Lastkraftwagenzüge mit nicht vollständig gefüllten Behältern vermieden werden und somit auch die Anzahl der Betriebsunterbrechungen zum Wechsel der Lastkraftwagen minimiert werden.

Gleichzeitig kann beispielsweise bei einer reduzierten Frästiefe die Vorschubgeschwindigkeit erhöht werden, so dass der Zeitbedarf zum Abfräsen einer Frässpur reduziert werden kann.

Vorzugsweise ist vorgesehen, dass das einstellbare Gesamtfräsvolumen der Fräsmaschine in einer Frässpur auf ein Gesamt-Ladevolumen eingestellt wird, das sich aus dem Volumen der nächstliegenden niedrigeren ganzzahligen Anzahl von Ladungen ergibt.

In diesem Fall erfolgt das Anpassen des Gesamt-Fräsvolumens an das festgelegte effektive Gesamt-Ladevolumen vorzugsweise durch Veränderung der Frästiefe. Durch Reduzieren der Frästiefe kann nämlich das Gesamt-Fräsvolumen innerhalb einer Frässpur so reduziert werden, dass es dem festgelegten effektiven Gesamt-Ladevolumen entspricht, mit dem eine ganzzahlige Anzahl von Ladungen in einer Frässpur möglich ist.

Eine alternative Möglichkeit besteht darin, dass das Anpassen des Gesamt-Fräsvolumens an das festgelegte effektive Gesamt-Ladevolumen durch Veränderung der effektiven Arbeitsbreite durch Wählen einer unterschiedlichen Überdeckung benachbarter Frässpuren erfolgt.

In diesem Fall wird die für den Fräsprozess optimierte Frästiefe beibehalten und die Reduktion des Gesamt-Fräsvolumens zur Anpassung an das Gesamt-Ladevolumen durch ein teilweises Überfahren der vorherigen Frässpur eingestellt.

Es ist dabei vorgesehen, dass die Vorschubgeschwindigkeit der Fräsmaschine derart an das effektive Gesamt-Fräsvolumen angepasst wird, dass eine voreingestellte Fräsleistung, vorzugsweise eine maximale Fräsleistung, eingehalten oder erreicht wird.

Dies geschieht vorzugsweise dadurch, dass der Beladungsvorgang durch Steuern der Fahrgeschwindigkeit des Lastkraftwagens in Abhängigkeit von der Vorschubgeschwindigkeit der Fräsmaschine und von dem gemessenen Beladungszustand eines Behälters geregelt wird.

Alternativ kann die Fahrgeschwindigkeit oder die aktuelle Position des Lastkraftwagens in Abhängigkeit von der Vorschubgeschwindigkeit oder dem in der aktuellen Frässpur zurückgelegten Weg der Fräsmaschine oder der aktuellen Abwurfposition der Transporteinrichtung gesteuert werden.

Es kann des weiteren vorgesehen sein, dass die Fahrgeschwindigkeit oder die aktuelle Position des Lastkraftwagens derart gesteuert wird, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

Das Steuern der Fahrgeschwindigkeit des Lastkraftwagens erfolgt vorzugsweise derart, dass die Fahrgeschwindigkeit des Lastkraftwagens höher oder gleich der Vorschubgeschwindigkeit der Fräsmaschine ist.

Alternativ kann vorgesehen sein, dass die Fahrgeschwindigkeit des Lastkraftwagens derart gesteuert wird, dass die Fahrgeschwindigkeit eine konstante positive Differenz zu der Vorschubgeschwindigkeit der Fräsmaschine aufweist.

Alternativ kann vorgesehen sein, dass die Fahrgeschwindigkeit des Lastkraftwagens derart gesteuert wird, dass die Fahrgeschwindigkeit des Lastkraftwagens diskontinuierlich verändert wird.

Zu Beginn des Beladevorgangs kann vorgesehen, sein dass die Steuerung der Fahrgeschwindigkeit des Lastkraftwagens mit einer höheren Fahrgeschwindigkeit als die Vorschubgeschwindigkeit der Fräsmaschine erst dann beginnt, wenn an der vorderen oder hinteren Endposition eine ausreichend hohe Anfangsschüttung abgeworfen worden ist.

Das Verfahren ist insbesondere vorteilhaft anwendbar, wenn Lastkraftwagen-Züge mit mehreren gelenkig miteinander verbundenen Anhängern verwendet werden.

Um einen kontinuierlichen Beladevorgang zu ermöglichen, ist dabei besonders vorteilhaft, wenn Behälter auf mehreren gelenkig miteinander verbundenen Anhängern verwendet werden, bei denen sich die oberen Stirnkanten der sich gegenüberliegenden Stirnwände benachbarter Behälter überlappen.

Dabei können Behälter verwendet werden, deren sich gegenüberliegende Stirnwände eine aneinander angepasste Krümmung um eine zu der Bodenoberfläche orthogonale Achse aufweisen derart, dass die sich gegenüberliegenden Stirnwände einen geringstmöglichen gegenseitigen Abstand aufweisen und dennoch ein gegenseitiges Verschwenken der Anhänger seitlich und in einem Rampenübergangsbereich ermöglichen.

Auch können Behälter verwendet werden, deren vordere Stirnwandseite konvex gekrümmt sind und vorzugsweise an der vorderen Stirnkante einen überragenden Kragen aufweisen, der ein Führerhaus des Lastkraftwagens und/oder die hintere obere konkav gekrümmte Stirnkante der Stirnwand eines vorausfahrenden Behälters überdeckt.

Im folgenden wird unter Bezugnahme auf die Zeichnungen ein Ausführung der Erfindung näher erläutert.

Es zeigen:

Fig. 1    eine graphische Darstellung einer sogenannten Tagebaugrube (Pit) einer Tagebaufläche,

Fig. 2    das Beladen eines Behälters eines LKWs über ein Transportband der Fräsmaschine,

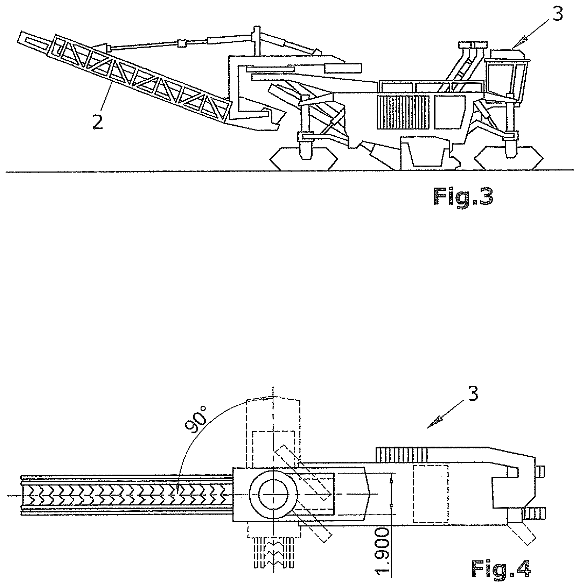

Fig. 3    eine Seitenansicht eines Surface Miners,

Fig. 4    eine Draufsicht auf einen Surface Miner,

Fig. 5    ein vollständiges Grubenprofil in Arbeitsrichtung der Fräsmaschine,

Fig. 6    ein vollständiges Grubenprofil quer zur Arbeitsrichtung,

Fig. 7    Definition der tatsächlichen Schneidtiefe,

Fig. 8    Materialhaufen bei realistischer und idealisierter Beladung, und

Fig. 9    eine Grundstruktur der LKW-Steuerung.

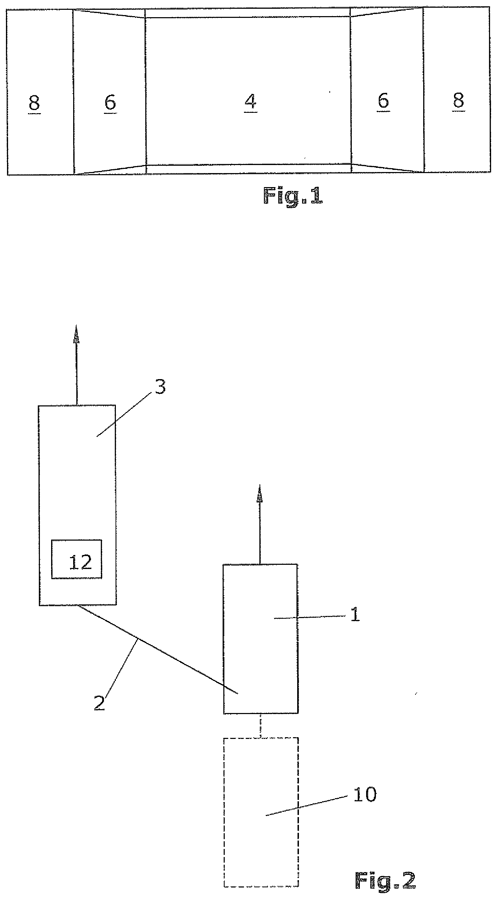

Fig. 1 zeigt eine Tagebaugrube (Pit) einer Tagebaufläche, wobei das Bezugszeichen 4 die zu bearbeitende Bodenfläche zeigt, die Fläche 6 eine Rampe, die zu einem erhöhten Wendeplatz 8 in dem jeweiligen Endbereich der Tagebaugrube (Pit) führt. In diesem Wendebereich 8 kann der Surface Miner 3 wenden, nachdem eine Frässpur abgearbeitet ist, um eine benachbarte Frässpur in Gegenrichtung zu bearbeiten.

Die Größe einer Tagebaugrube (Pit) beträgt beispielsweise ca. 100 m Breite und ca. 500 m Länge.

Wie aus Fig. 2 ersichtlich, wird das von dem Surface Miner 3 abgearbeitete Fräsgut, z.B. Erz oder Kohle, über ein Transportband 2 auf einen Lastkraftwagen 1 geladen, der auch einen oder mehrere Anhänger 10 aufweisen kann. Auf dem Lastkraftwagen 1 befindet sich ein Behälter, dessen Ladevolumen beispielsweise 100 t beträgt. Häufig werden Lastkraftwagen-Züge mit insgesamt drei Behältern mit jeweils 100 t auf Anhängern verwendet, so dass die Gesamtladekapazität einer derartigen Lastkraftwagen-Ladung ca. 300 t beträgt. Bei Verwendung eines Lastkraftwagens mit einem 100 t Behälters muss ein Wechsel der Lastkraftwagen auf der Länge einer Frässpur von ca. 500 m ca. 16 bis 17 mal erfolgen. Dies bedeutet, dass eine kurze Betriebsunterbrechung beim Wechsel des LKWs bereits nach jeweils 30 m erfolgen muss, da das Transportband angehalten und somit auch der Fräsprozess aufgrund der hohen Fräsleistung der Fräsmaschine beim Wechsel der Fahrzeuge kurz unterbrochen werden muss.

Fig. 2 zeigt einer Surface Miner 3, der eine Steuerung 12 zum Steuern des Abarbeitungsprozesses beim Abbau von Fräsgut einer Tagebaufläche oder beim Abfräsen von Schichten einer Verkehrsfläche aus Asphalt oder Beton und zum Steuern des Abtransports der abgearbeiteten Fräsgutes zum Beladen eines Lastkraftwagens aufweist.

Die Bodenoberfläche wird entlang einer vorgegebenen Frässpur vorgegebener Länge abgearbeitet.

Das Fräsgut wird über eine Fördereinrichtung, z. B. ein Transportband 2, zu mindestens einem Behälter eines neben der Fräsmaschine mitfahrenden Lastkraftwagens 1 mit einem vorgegebenen maximalen Ladevolumen je Ladung befördert.

Ein vollständig beladener Lastkraftwagen wird durch einen unbeladenen ersetzt, wenn das maximale Ladevolumen einer Lastkraftwagen-Ladung erreicht ist.

Die Steuerung 12 der Fräsmaschine 3 berechnet

- das sich über die Länge der aktuellen Frässpur ergebenden maximalen Gesamt-Ladevolumen in Abhängigkeit von der aktuellen effektiven Arbeitsbreite und einer in Bezug auf eine vorgegebene, vorzugsweise maximale, Fräsleistung optimierte Frästiefe,
- die Anzahl der für das maximale Gesamt-Ladevolumen einer Frässpur erforderlichen Lastkraftwagen-Ladungen, und bestimmt
- ein effektives Gesamt-Ladevolumen der aktuellen Frässpur, das sich aus der nächstliegenden ganzzahligen Anzahl von Ladungen ergibt.

Die Steuerung 12 passt dann das einstellbare Gesamt-Fräsvolumen der Fräsmaschine über die Länge der Frässpur an das effektive Gesamt-Ladevolumen an, das eine ganzzahlige Anzahl von Ladungen ergibt.

Die Steuerung 12 kann zur Einstellung und Anpassung des Gesamt-Fräsvolumens das effektive Gesamt-Ladevolumen, das sich aus der nächstliegenden niedrigeren ganzzahligen Anzahl von Ladungen ergibt, berechnen.

Die Steuerung 12 kann zur Anpassung des einstellbaren Gesamt-Fräsvolumens an das festgelegte effektive Gesamt-Ladevolumen die Frästiefe verändern, vorzugsweise verringern.

Alternativ kann die Steuerung 12 zur Anpassung des einstellbaren Gesamt-Fräsvolumens an das festgelegte effektive Gesamt-Ladevolumen die effektive Arbeitsbreite durch Wählen einer unterschiedlichen Überdeckung benachbarter Frässpuren verändern.

Die Steuerung 12 kann die Vorschubgeschwindigkeit der Fräsmaschine auf eine vorgewählte Fräsleistung, vorzugsweise eine maximale Fräsleistung, einstellen.

Die Steuerung 12 kann den Beladungsvorgang mindestens eines Behälters durch Steuern der Fahrgeschwindigkeit des Lastkraftwagens in Abhängigkeit von der Vorschubgeschwindigkeit der Fräsmaschine und von dem gemessenen Beladungszustand des Behälters regeln.

Die Steuerung 12 kann die Fahrgeschwindigkeit oder die aktuelle Position des Lastkraftwagens in Abhängigkeit von der Vorschubgeschwindigkeit oder von dem in der aktuellen Frässpur zurückgelegten Weg der Fräsmaschine oder von der aktuellen Abwurfposition der Transporteinrichtung in Relation zu dem Lastkraftwagen steuern.

Dabei kann die Steuerung 12 die Fahrgeschwindigkeit oder die aktuelle Position des Lastkraftwagens derart steuern, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

Vorzugsweise kann die Steuerung die Fahrgeschwindigkeit des Lastkraftwagens derart steuern, dass die Fahrgeschwindigkeit des Lastkraftwagens höher oder gleich der Vorschubgeschwindigkeit der Fräsmaschine ist.

Die Steuerung 12 kann die Fahrgeschwindigkeit des Lastkraftwagens erst dann erhöhen, wenn an der vorderen oder hinteren Endposition eine ausreichend hohe Anfangsschüttung vorliegt.

Die Behälter können auf mehreren gelenkig miteinander verbundenen Anhängern angeordnet sein, wobei sich die benachbarten obere Stirnkanten der sich gegenüberliegenden Stirnwände überlappen.

Die benachbarten Stirnwände der Behälter auf den mehreren gelenkig miteinander verbundenen Anhängern können eine aneinander angepasste Krümmung um eine zu der Bodenoberfläche orthogonale Achse aufweisen, derart dass die Stirnwände einen geringstmöglichen gegenseitigen Abstand aufweisen und dennoch ein seitliches Verschwenken der Anhänger ermöglichen.

Die Behälter können an der vorderen Stirnwandseite konvex gekrümmt sein und vorzugsweise an der vorderen Stirnkante einen überragenden Kragen aufweisen, der ein Führerhaus des Lastkraftwagens und/oder die hintere obere konkav gekrümmte Stirnkante der Stirnwand eines vorausfahrenden Behälters überdeckt.

Im Folgenden wird ein Bemessungs- und Steuerkonzept für den automatischen Tagebau beschrieben. Der Vorgang umfasst folgende Schritte:

- Berechnen/Bemessen der Schneidtiefe für jede Schicht (als Funktion eines "vertikalen" Tageabbauvorgangs, unter der Annahme, dass die Grubenbemessungen bekannt sind) zur Erzielung der optimalen LKW-Beladung für jede Schicht,
- Anwenden eines Steuerkonzepts für den Tagebau-/Beladungsvorgang zum Erreichen einer optimalen LKW-Beladung bei minimiertem Steuerungs- und Kommunikationsaufwand.

Der grundlegende Vorteil des folgenden Steuerkonzepts besteht in der Tatsache, dass ein fortlaufender Beladungsvorgang zwischen LKW und Tagebau-Fräsmaschine, bei dem sich beide Maschinen mit konstanter Geschwindigkeit bewegen, vom Steuerkonzept her besonders leicht durchführbar ist und fast keine Kommunikation zwischen der Fräsmaschine und dem LKW erfordert (außer am Beginn und am Ende des Beladungsvorgangs).

Das Prinzip des vorliegenden Erfindung besteht im Steuern der LKW-Geschwindigkeit und -Richtung als Funktion der tatsächlichen Fräsmaschinen-Position und -Geschwindigkeit (bzw. der Förderband-Position und -Geschwindigkeit der Fräsmaschine), der Schneidtiefe und -breite der Fräsmaschine und anderer im Voraus bekannter Prozessparameter wie z.B. der maximalen Nutzlast des LKW, der äquivalenten Beladungslänge des LKW und der Dichte des abgefrästen Materials.

Berechnung der optimalen Schneidtiefe als Funktion des vertikal verlaufenden Schichtabtragvorgangs:
Allgemeine Definitionen und Relationen:

Bekannte Prozessparameter und -variablen:

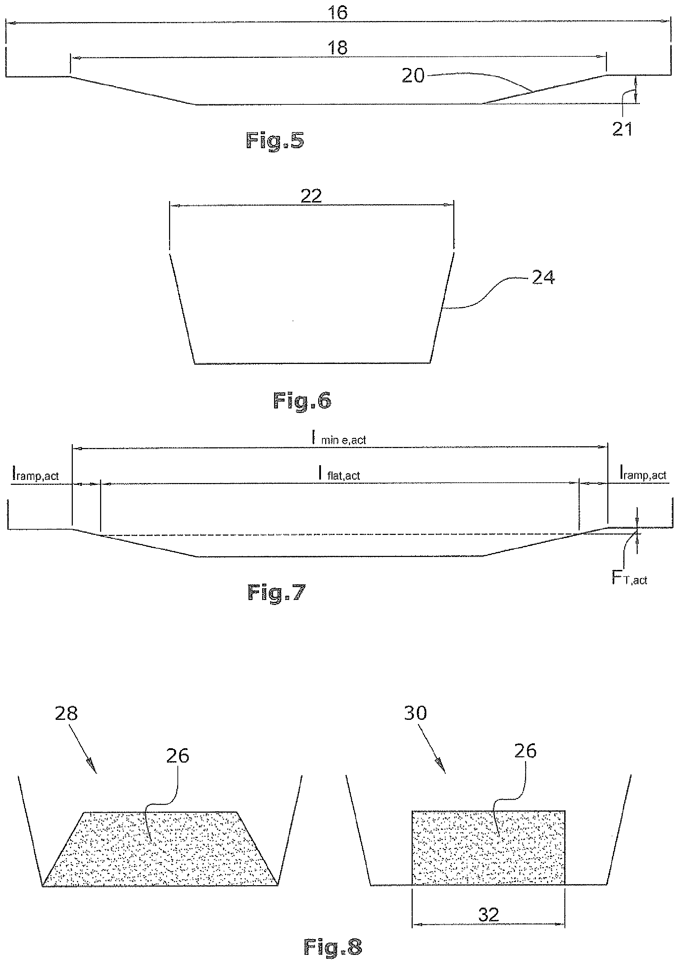

$l_{mine,max}$ in [$m$]: maximale Gesamt-Horizontalstrecke, die ohne Umkehr der Fräsmaschine abgebaut werden soll (einschließlich der Rampe und des flachen Teils; siehe Fig. 5)

$\alpha_{ramp}$ in [$m$]: Abbaurampen-Winkel; siehe Fig. 5

$\rho_{mat}$ in [$t/m^3$] : Dichte des abgebauten Materials

$M_{pay}$ in [$t$]: Nutzlast des LKW

$L$ in [-]: Lockerungsfaktor, Relation zwischen der Dichte des geschnittenen Materials und der Dichte des geladenen Materials

$F_{T,max}$ [$m$]: maximale Schneidtiefe

$F_B$ in [$m$]: Schneidbreite

$F_{T,act}$ in [$m$] : tatsächliche Schneidtiefe

Unbekannte und zu bestimmende Prozessvariablen (in der Abfolge der Lösung):

$l_{mine,act}$ in [$m$]: tatsächliche Gesamt-Horizontalstrecke, die ohne Umkehr der Fräsmaschine abgebaut werden soll (einschließlich der Rampe und des flachen Teils; siehe Fig. 5)

$l_{ramp,act}$ in [$m$]: tatsächliche Horizontalstrecke, die abgebaut werden soll, während sich die Fräsmaschine auf der Rampe befindet; siehe Fig. 7

$l_{flat,act}$ in [$m$]: tatsächliche Horizontalstrecke, die abgebaut werden soll, während sich die Fräsmaschine auf dem flachen Teil des Grubenprofils befindet; siehe Fig. 7

$Q_{ramp,act}$ in [$m^3$]: Materialvolumen, das auf der Rampe geladen werden soll

$Q_{flat,act}$ in [$m^3$]: Materialvolumen, das auf dem flachen Teil der Abbau-Spur geladen werden soll,

$Q_{total,act}$ in [$m^3$]: Gesamt-Materialvolumen, das auf einer einzelnen Spur geladen werden soll,

$M_{total,act}$ in [$t$]: Gesamtgewicht, das auf einer einzelnen Spur geladen werden soll,

$n_{trucks}$ in [-] : Anzahl von LKW, die für die Gesamtlast einer einzelnen Spur erforderlich ist.

Fig. 1 zeigt eine Draufsicht auf das Muster einer Grube, und Fign. 5 und 6 zeigen die relevanten Profile. In Fig. 5 ist ein vollständiges Grubenprofil in Arbeitsrichtung der Fräsmaschine dargestellt. In Fig. 5 ist mit 16 die maximale Grubenlänge, mit 18 die maximale Abbaulänge, mit 21 die maximale Abbautiefe und mit 20 die Abbau-Rampe dargestellt, wobei die Abbau-Rampe eine Neigung von beispielsweise 1:10~5,71° aufweist. In Fig. 6 ist das vollständige Grubenprofil quer zur Arbeitsrichtung dargestellt. In Fig. 6 ist mit 22 die maximale Abbautiefe und mit 24 die Abbau-Rampe dargestellt, wobei diese Abbau-Rampe beispielsweise eine Neigung von 1: 0,25~76° aufweist. Es sei angenommen, das die Gesamt-Grubenabmessungen und auch das Profil vor dem Start des Abtragvorgangs bekannt sind. Das Bestimmen der Abmessungen erfolgt typischerweise vor dem Start des Abbauvorgangs durch extensive Analyse von Bohrproben.

Berechnungsvorgang:

- Beginn am oberen Bereich der Grube unter Einstellung von $l_{min\,e,\,act}$ auf den Anfang der Spurlänge und Einstellung der Schneidtiefe auf die maximale Schneidtiefe
- Berechnen der Anzahl der benötigten LKW mittels des angegebenen Vorgangs
- Reduzieren der Anzahl der benötigten LKW auf die nächstkleinere Ganzzahl
- Neuberechnen der Schneidtiefe und der tatsächlichen Horizontal-Strecke an dem flachen Teil $l_{flat,act}$
- Setzen von $l_{flat,act}$ als Startwert für $l_{min\,e,\,act}$ zum Berechnen der nächsten Schneidtiefe

Das Materialvolumen, das an einer Rampe geladen werden muss, lässt sich errechnen aus

$$Q_{ramp,act} = \frac{1}{2} \cdot l_{ramp,act} \cdot F_{T,act} \cdot F_B \cdot L.$$

In ähnlicher Weise lässt sich das Materialvolumen, das an dem flachen Teil geladen werden muss, ableiten aus

$$Q_{flat,act} = l_{flat,act} \cdot F_{T,act} \cdot F_B \cdot L.$$

Das gesamte Material, das für die gesamte Spur geladen werden muss, beträgt einfach

$$Q_{total,act} = Q_{flat,act} + 2 \cdot Q_{ramp,act}.$$

Durch Ersetzen des Materialvolumens der Rampe und des flachen Teils ergibt sich

$$Q_{total,act} = l_{flat,act} \cdot F_{T,act} \cdot F_B \cdot L + 2 \cdot \frac{1}{2} \cdot l_{ramp,act} \cdot F_{T,act} \cdot F_B \cdot L,$$

was weiter vereinfacht werden kann zu

$$Q_{total,act} = \underbrace{(l_{flat,act} + l_{ramp,act})}_{l_{min\,e,act}} \cdot F_{T,act} \cdot F_B \cdot L$$

Das zu ladende Gesamtgewicht beträgt

$$M_{total,act} = Q_{total,act} \cdot \rho_{mat}$$

Die Anzahl der für die Gesamtlast erforderlichen LKW-Ladungen beträgt:

$$n_{trucks} = M_{total,act} / M_{pay}.$$

Eine Neuberechnung der erforderlichen Schneidtiefe ist nun leicht durchführbar, indem die vorstehenden Gleichungen für die Schneidtiefe gelöst werden; daraus ergibt sich

$$F_{T,act} = \frac{Q_{total,act}}{F_B \cdot L \cdot l_{min\,e,act}} .$$

Die aktuelle Gesamt-Horizontalstrecke des flachen Teils kann bestimmt werden, indem zunächst die Strecke der Rampe berechnet wird

$$l_{ramp,act} = \frac{F_{T,act}}{\tan(\alpha_{ramp})} .$$

Die verbleibende Strecke des flachen Teils $l_{flat,act}$ kann dann berechnet werden aus (Fig. 7)

$$l_{flat,act} = l_{min\,e,act} - 2 \cdot l_{ramp,act} .$$

Die Gesamt-Horizontalstrecke $l_{min\,e,act}$ für die Berechnung der nächsten Schicht gleicht der zuletzt berechneten Strecke des flachen Teils

$$l_{min\,e,act} = l_{flat,act} ,$$

mit Ausnahme der ersten Berechnung, wobei diese Länge auf die maximale anfängliche Horizontalstrecke $l_{min\,e,max}$ eingestellt werden muss.

Fig. 8 zeigt Materialhaufen 26 bei realistischer und idealisierter Beladung 28, 30, wobei mit 32 die Beladungslänge dargestellt ist.

Steuergesetz für die LKW-Geschwindigkeit:
Allgemeine Definitionen und Relationen:

Bekannte Prozessparameter und -variablen:

$F_T$ in [$m$]: Schneidtiefe
$F_B$ in [$m$]: Schneidbreite
$v_{SM}$ in [$m$/min] : Fräsmaschinen-Vorschubgeschwindigkeit
$M_{pay}$ in [$t$]: Nutzlast des LKW
$L$ in [-]: Lockerungsfaktor, Relation zwischen der Dichte des geschnittenen Materials und der Dichte des geladenen Materials
$\rho_{mat}$ in [$t/m^3$]: Dichte des abgebauten Materials
$l_{lc}$ in [$m$]: äquivalente LKW-Beladungslänge

Unbekannte und zu bestimmende Prozessvariablen (in Richtung der Auflösung):

$t_{lc}$ in [min]: LKW-Beladezeit

$Q_{lc}$ in [$m^3$]: Materialvolumen für einen Beladezyklus

$\dot{q}$ in [$m^3$/min] : Materialströmungsrate aus der Fräsmaschine

$A_{tray,cr}$ in [$m^2$]: beladbarer Querschnittsbereich der LKW-Ladekippe

$v_{Truck}$ in [$m$/min]: LKW-Geschwindigkeit in Vorschubrichtung

Dabei bedeuten: [min]: Minuten [*m*]: Meter [*m³*/min]: Kubikmeter pro Minute

Der LKW-Beladungs-Querschnittsbereich als Funktion der Oberflächenfräsmaschinen-Geschwindigkeit, der Schneidtiefe, der Schneidbreite und der LKW-Geschwindigkeit lässt sich berechnen unter Verwendung der folgenden einfachen Annahmen und Relationen:

- Das Material kann ohne einen Schüttwinkel auf den LKW geladen werden (siehe Fig. 8 zur Veranschaulichung)
- Der LKW 1 und die Fräsmaschine 3 bewegen sich mit konstanter Geschwindigkeit
- Der LKW 1 startet das Laden am Vorderende der Ladekippe und bewegt sich schneller als die Fräsmaschine
- Es erfolgt keine Speicherung von Material in der Fräsmaschine 3
- Es erfolgt ein konstantes Lockern des geschnittenen Materials, d.h. das von der Fördervorrichtung zugeführte Material ist gleich dem geschnittenen Material, multipliziert mit dem Lockerungsfaktor.

Das von der Fräsmaschine 3 während einer bestimmten Beladungszeit $t_{lc}$ zugeführte Material kann berechnet werden aus

$$Q_{lc} = F_T \cdot F_B \cdot v_{SM} \cdot L \cdot t_{lc} = \dot{q} \cdot t_{lc}.$$

Der resultierende Beladungs-Querschnittsbereich der LKW-Ladekippe kann berechnet werden aus

$$A_{tray,cr} = Q_{lc} / l_{lc}$$

wobei $l_{lc}$ eine äquivalente Beladungslänge unter der Annahme repräsentiert, dass die auf dem LKW platzierte Ladung einem Quader gleicht.

Durch Ersetzen des Materialvolumens und der Beladungslänge erhält man

$$A_{tray,cr} = F_T \cdot F_B \cdot L \cdot \frac{v_{SM}}{v_{Truck} - v_{SM}}, \qquad (1)$$

was bedeutet, dass für eine gegebene Schneidtiefe, eine gegebene Schneidbreite und einen gegebenen Lockerungsfaktor der Beladungs-Querschnittsbereich eine Funktion der Fräsmaschinen-Geschwindigkeit und der Differenz von Fräsmaschinen- und LKW-Geschwindigkeit ist. Diese Relation kann sehr leicht geprüft werden. Unter der Annahme, dass der LKW stillsteht ($V_{truck} = 0$), ergibt sich aus der oben angeführten Relation

$$A_{tray,cr} = F_T \cdot F_B \cdot L,$$

was bedeutet, dass der von der Fräsmaschine zu schneidende MaterialQuerschnitt mit dem Lockerungsfaktor multipliziert in dem LKW 1 gespeichert werden muss.

Um nun einen bestimmten Beladungs-Querschnittsbereich der LKW-Ladekippe erhalten zu können, ergibt die Gleichung (1) ein Steuergesetz zum Einstellen der LKW-Geschwindigkeit und/oder der Fräsmaschinen-Geschwindigkeit für eine gegebene Schneidtiefe und -breite. In der Praxis unterliegt der Beladungsbereich einer Beschränkung aufgrund der maximalen Nutzlast der LKW-Ladekippe. Bei einer gegebenen maximalen Nutzlast der LKW-Ladekippe ist das maximale Materialvolumen, das während eines Beladungszyklus geladen werden kann, definiert durch

$$Q_{lc,max} = M_{pay} / \rho_{mat}.$$

Das maximale Materialvolumen kann dann übersetzt werden in einen maximalen Beladungs-Querschnittsbereich

$$A_{tray,cr,max} = Q_{lc,max} / l_{lc} \qquad (2).$$

Durch Einsetzen von (2) in (1) und Lösen von (1) für die LKW-Geschwindigkeit ergibt sich ein Feedforward-Steuergesetz für die LKW-Geschwindigkeit:

$$v_{Truck} = v_{SM}\left(1 + \frac{F_T \cdot F_B \cdot L \cdot \rho_{mat} \cdot l_{lc}}{M_{Pay}}\right).$$

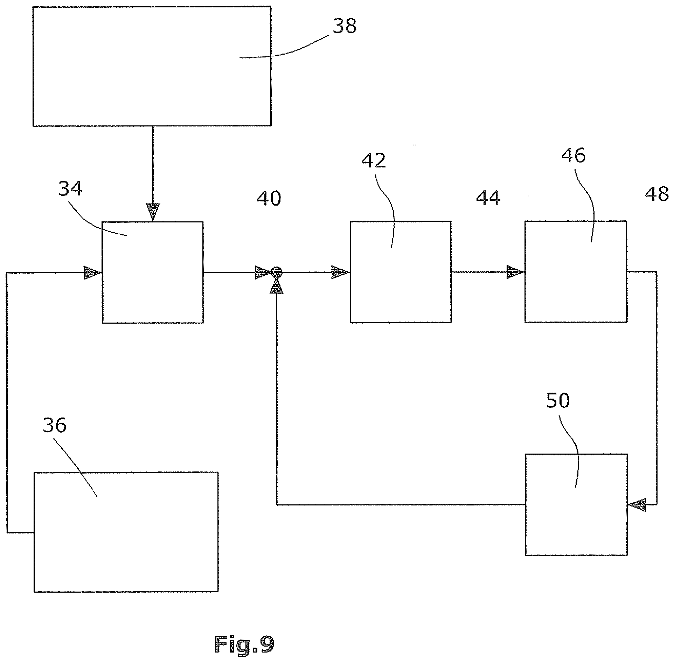

In Fig. 9 ist die Grundstruktur einer LKW-Steuerung dargestellt. Die Lkw-Positions- und Geschwindigkeits-Feedforward-Steuerung 34 enthält eine Feedforward-Steuerregel für die LKW-Geschwindigkeit und das Abbilden der Bandposition auf die LKW-Position. Die Lkw-Positions- und Geschwindigkeits-Feedforward-Steuerung 34 erhält Messwerte 36, wie beispielsweise absolute Bandpositionen und Geschwindigkeiten, tatsächliche Schneidtiefe und tatsächliche Fräsmaschinen-Geschwindigkeit. Ferner existieren Parameter 38, wie beispielsweise die maximale Nutzlast des LKWs, der Lockerungsfaktor, die Materialdichte, die äquivalente Beladungslänge der Ladekippe oder die Schneidbreite. Mit 40 sind die befohlenen Geschwindigkeiten und Positionen (Richtung und Amplitude), mit 42 die LKW-Steuervorrichtung, mit 44 die Steuerbefehle, Geschwindigkeitsbefehle, mit 46 der LKW, mit 48 die absolute LKW-Position und mit 50 das ATS/GPS dargestellt.

## Patentansprüche

1. Verfahren zum Fräsen einer Tagebaufläche (4) oder zum Abfräsen von Schichten einer Verkehrsfläche aus Asphalt oder Beton mit einer die Bodenoberfläche abarbeitenden Fräsmaschine (3),

   - durch Fräsen der Bodenoberfläche entlang einer vorgegebenen Frässpur vorgegebener Länge,
   - durch Transportieren des Fräsgutes über eine Fördereinrichtung (2) zu mindestens einem Behälter eines neben der Fräsmaschine mitfahrenden Lastkraftwagens (1) mit einem vorgegebenen maximalen Ladevolumen je Ladung, und
   - durch Ersetzen eines vollständig beladenen Lastkraftwagens (1) durch einen unbeladenen, wenn das maximale Ladevolumen einer Lastkraftwagen-Ladung erreicht ist,

   **gekennzeichnet durch**

   - das Berechnen des sich über die Länge der aktuellen Frässpur ergebenden maximalen Gesamt-Ladevolumens in Abhängigkeit der aktuellen effektiven Arbeitsbreite und einer in Bezug auf eine vorgegebene, vorzugsweise maximale Fräsleistung optimierten Frästiefe,
   - das Berechnen der Anzahl der für das maximale Gesamtladevolumen einer Frässpur erforderlichen Lastkraftwagen-Ladungen,
   - das Festlegen eines effektiven Gesamt-Ladevolumens der aktuellen Frässpur, das sich aus dem Volumen der nächstliegenden ganzzahligen Anzahl von Ladungen ergibt, und
   - das Anpassen des einstellbaren Gesamt-Fräsvolumens der Fräsmaschine (3) über die Länge der Frässpur an das effektive Gesamt-Ladevolumen, das eine ganzzahlige Anzahl von Ladungen ergibt.

2. Verfahren nach Anspruch 1, **dadurch gekennzeichnet, dass** das Gesamt-Fräsvolumen der Fräsmaschine in einer Frässpur auf ein Gesamt-Ladevolumens eingestellt wird, das sich aus dem Volumen der nächstliegenden niedrigeren ganzzahligen Anzahl von Ladungen ergibt.

3. Verfahren nach Anspruch 1 oder 2, **gekennzeichnet durch** das Anpassen des Gesamt-Fräsvolumens an das festgelegte effektive Gesamt-Ladevolumen durch Veränderung der Frästiefe.

4. Verfahren nach einem der Ansprüche 1 bis 3, **dadurch gekennzeichnet, dass** die Vorschubgeschwindigkeit der Fräsmaschine (3) derart an das effektive Gesamt-Fräsvolumen angepasst wird, dass eine voreingestellte Fräsleistung, vorzugsweise eine maximale Fräsleistung, eingehalten oder erreicht wird.

5. Verfahren nach einem der Ansprüche 1 bis 4, **gekennzeichnet durch** das Regeln des Beladungsvorganges durch Steuern der Fahrgeschwindigkeit des Lastkraftwagens (1) in Abhängigkeit von der Vorschubgeschwindigkeit der Fräsmaschine (3) und von dem gemessenen Beladungszustand eines Behälters.

**6.** Verfahren nach einem der Ansprüche 1 bis 4, **gekennzeichnet durch** das Steuern der Fahrgeschwindigkeit oder der aktuellen Position des Lastkraftwagens (1) in Abhängigkeit von der Vorschubgeschwindigkeit oder dem in der aktuellen Frässpur zurückgelegten Weg der Fräsmaschine (3) oder der aktuellen Abwurfposition der Transporteinrichtung (2).

**7.** Verfahren nach einem der Ansprüche 1 bis 6, **gekennzeichnet durch** das Steuern der Fahrgeschwindigkeit oder der aktuellen Position des Lastkraftwagens (1) derart, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

**8.** Fräsmaschine (3), insbesondere Surface Miner, mit einer Steuerung zum Steuern des Abarbeitungsprozesses beim Abbau von Fräsgut einer Tagebaufläche (4) oder beim Abfräsen von Schichten einer Verkehrsfläche aus Asphalt oder Beton und zum Steuern des Abtransports der abgearbeiteten Fräsgutes zum Beladen eines Lastkraftwagens (1), wobei die Fräsmaschine (3)

- die Bodenoberfläche entlang einer vorgegebenen Frässpur vorgegebener Länge abarbeitet,
- das Fräsgut über eine Fördereinrichtung (2) zu mindestens einem Behälter eines neben der Fräsmaschine (3) mitfahrenden Lastkraftwagens (1) mit einem vorgegebenen maximalen Ladevolumen je Ladung befördert, und wobei
- ein vollständig beladener Lastkraftwagens durch einen unbeladenen ersetzt wird, wenn das maximale Ladevolumen einer Lastkraftwagen-Ladung erreicht ist,

**dadurch gekennzeichnet,**
**dass** die Steuerung (12)

- das sich über die Länge der aktuellen Frässpur ergebenden maximalen Gesamt-Ladevolumen in Abhängigkeit von der aktuellen effektiven Arbeitsbreite und einer in Bezug auf eine vorgegebene, vorzugsweise maximale, Fräsleistung optimierte Frästiefe berechnet,
- die Anzahl der für das maximale Gesamt-Ladevolumen einer Frässpur erforderlichen Lastkraftwagen-Ladungen berechnet,
- ein effektives Gesamt-Ladevolumen der aktuellen Frässpur bestimmt, das sich aus der nächstliegenden ganzzahligen Anzahl von Ladungen ergibt, und
- das einstellbare Gesamt-Fräsvolumen der Fräsmaschine (3) über die Länge der Frässpur an das effektive Gesamt-Ladevolumen anpasst, das eine ganzzahlige Anzahl von Ladungen ergibt.

**9.** Fräsmaschine nach Anspruch 8, **dadurch gekennzeichnet, dass** die Steuerung (12) zur Einstellung und Anpassung des Gesamt-Fräsvolumens das effektive Gesamt-Ladevolumen, das sich aus der nächstliegenden niedrigeren ganzzahligen Anzahl von Ladungen ergibt, berechnet.

**10.** Fräsmaschine nach Anspruch 8 oder 9, **dadurch gekennzeichnet dass** die Steuerung zur Anpassung des einstellbaren Gesamt-Fräsvolumens an das festgelegte effektive Gesamt-Ladevolumen die Frästiefe verändert.

**11.** Fräsmaschine nach einem der Ansprüche 8 bis 10, **dadurch gekennzeichnet dass** die Steuerung (12) den Beladungsvorgang mindestens eines Behälters durch Steuern der Fahrgeschwindigkeit des Lastkraftwagens (1) in Abhängigkeit von der Vorschubgeschwindigkeit der Fräsmaschine und von dem gemessenen Beladungszustand des Behälters regelt.

**12.** Fräsmaschine nach einem der Ansprüche 8 bis 11, **dadurch gekennzeichnet dass** die Steuerung (12) die Fahrgeschwindigkeit oder die aktuelle Position des Lastkraftwagens in Abhängigkeit von der Vorschubgeschwindigkeit oder von dem in der aktuellen Frässpur zurückgelegten Weg der Fräsmaschine oder von der aktuellen Abwurfposition der Transporteinrichtung in Relation zu dem Lastkraftwagen steuert.

**13.** Fräsmaschine nach einem der Ansprüche 8 bis 12, **dadurch gekennzeichnet dass** die Steuerung die Fahrgeschwindigkeit oder die aktuelle Position des Lastkraftwagens derart steuert, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

**Claims**

1. Method for milling an opencast mining surface (4) or for milling off layers of an asphalt or concrete traffic surface with a milling machine (3) removing the ground surface,

   - by milling the ground surface along a predetermined milling track having a predetermined length,
   - by transporting the milled material via a conveying device (2) to at least one container of a truck (1) that travels along next to the milling machine, said truck having a predetermined maximum loading volume per load, and
   - by replacing a fully loaded truck (1) with an unloaded truck when the maximum loading volume of a truck load has been reached,

   **characterized by**

   - calculation of the maximum total loading volume resulting over the length of the current milling track as a function of the current effective working width and a milling depth that has been optimized in relation to a predetermined, preferably maximum milling power,
   - calculation of the number of truck loads required for the maximum total loading volume of a milling track,
   - determination of an effective total loading volume of the current milling track, which results from the volume of the nearest whole number of loads, and
   - adjustment of the adjustable total milling volume of the milling machine (3) over the length of the milling track to match the effective total loading volume that results in a whole number of loads.

2. Method in accordance with claim 1, **characterized in that** the total milling volume of the milling machine in a milling track is adjusted to match a total loading volume which results from the volume of the nearest lower whole number of loads.

3. Method in accordance with claim 1 or 2, **characterized by** adjusting the total milling volume to match the specified effective total loading volume by altering the milling depth.

4. Method in accordance with one of the claims 1 to 3, **characterized in that** the advance speed of the milling machine (3) is adjusted to match the effective total milling volume in such a fashion that a preselected milling power, preferably maximum milling power, is maintained or achieved.

5. Method in accordance with one of the claims 1 to 4, **characterized by** regulating the loading process by controlling the travel speed of the truck (1) as a function of the advance speed of the milling machine (3) and of the measured loading condition of a container.

6. Method in accordance with one of the claims 1 to 4, **characterized by** controlling the travel speed or the current position of the truck (1) as a function of the advance speed of the milling machine (3), or of the distance travelled by the milling machine in the current milling track, or of the current discharge position of the transport device (2).

7. Method in accordance with one of the claims 1 to 6, **characterized by** controlling the travel speed or the current position of the truck (1) in such a fashion that the discharge position of the conveying device above the at least one container moves from a front or rear end position inside the container to an end position that is opposite in longitudinal direction.

8. Milling machine (3), in particular surface miner, with a control unit for controlling the removal process during the mining of milled material of an opencast mining surface (4) or during the milling off of layers of an asphalt or concrete traffic surface, and for controlling the transporting away of the removed milled material for loading onto a truck (1), where the milling machine (3)

   - removes the ground surface along a predetermined milling track having a predetermined length,
   - conveys the milled material via a conveying device (2) to at least one container of a truck (1) that travels along next to the milling machine (3), said truck having a predetermined maximum loading volume per load, and where
   - a fully loaded truck is replaced with an unloaded truck when the maximum loading volume of a truck load has been reached,

   **characterized in that**

the control unit (12)

- calculates the maximum total loading volume resulting over the length of the current milling track as a function of the current effective working width and a milling depth that has been optimized in relation to a predetermined, preferably maximum milling power,
- calculates the number of truck loads required for the maximum total loading volume of a milling track,
- determines an effective total loading volume of the current milling track, which results from the nearest whole number of loads, and
- adjusts the adjustable total milling volume of the milling machine (3) over the length of the milling track to match the effective total loading volume that results in a whole number of loads.

9. Milling machine in accordance with claim 8, **characterized in that** the control unit (12) for setting and adjusting the total milling volume calculates the effective total loading volume which results from the nearest lower whole number of loads.

10. Milling machine in accordance with claim 8 or 9, **characterized in that**, for the purpose of adjusting the adjustable total milling volume to match the specified effective total loading volume, the control unit alters the milling depth.

11. Milling machine in accordance with one of the claims 8 to 10, **characterized in that** the control unit (12) regulates the loading process of at least one container by controlling the travel speed of the truck (1) as a function of the advance speed of the milling machine and of the measured loading condition of the container.

12. Milling machine in accordance with one of the claims 8 to 11, **characterized in that** the control unit (12) controls the travel speed or the current position of the truck as a function of the advance speed of the milling machine, or of the distance travelled by the milling machine in the current milling track, or of the current discharge position of the transport device in relation to the truck.

13. Milling machine in accordance with one of the claims 8 to 12, **characterized in that** the control unit controls the travel speed or the current position of the truck in such a fashion that the discharge position of the conveying device above the at least one container moves from a front or rear end position inside the container to an end position that is opposite in longitudinal direction.


**Revendications**

1. Procédé de fraisage d'une surface d'extraction à ciel ouvert (4) ou de fraisage de couches d'une surface de circulation en asphalte ou en béton au moyen d'une fraiseuse (3) traitant la surface du sol,

- par fraisage de la surface du sol le long d'une voie de fraisage prédéterminée de longueur prédéterminée,
- par transport du matériau fraisé au moyen d'un convoyeur (2) jusqu'à au moins un récipient d'un camion (1), ayant un volume de charge maximum prédéterminé pour chaque charge, qui se déplace à côté de la fraiseuse et
- par remplacement d'un camion (1) entièrement chargé par un camion non chargé lorsque le volume de charge maximal d'une charge de camion est atteint,

**caractérisé par**

- le calcul du volume de charge total maximum résultant de la longueur de la voie de fraisage actuelle en fonction de la largeur de travail effective actuelle et d'une profondeur de fraisage optimisée par rapport à une performance de fraisage prédéterminée, de préférence maximale,
- le calcul du nombre de charges de camion requises pour le volume de charge total maximum d'une voie de fraisage,
- la détermination d'un volume de charge total effectif de la voie de fraisage actuelle qui résulte du volume du nombre entier de charges le plus proche, et
- l'adaptation du volume de fraisage total réglable de fraiseuse (3) sur la longueur de la voie de fraisage au volume de charge total effectif qui donne un nombre entier de charges.

2. Procédé selon la revendication 1, **caractérisé en ce que** le volume de fraisage total de la fraiseuse dans une voie de fraisage est réglé à un volume de charge total qui résulte du volume du nombre entier de charge inférieur le plus proche.

**3.** Procédé selon la revendication 1 ou 2, **caractérisé par** l'adaptation du volume de fraisage total au volume de charge total effectif spécifié par modification de la profondeur de fraisage.

**4.** Procédé selon l'une des revendications 1 à 3, **caractérisé en ce que** la vitesse d'avance de la fraiseuse (3) est adaptée au volume de fraisage total effectif de manière à maintenir ou atteindre une performance de fraisage prédéfinie, de préférence maximale.

**5.** Procédé selon l'une des revendications 1 à 4, **caractérisé par** la régulation du processus de chargement par commande de la vitesse de déplacement du camion (1) en fonction de la vitesse d'avance de la fraiseuse (3) et de l'état de chargement mesuré d'un récipient.

**6.** Procédé selon l'une des revendications 1 à 4, **caractérisé par** la commande de la vitesse d'avance ou de la position actuelle du camion (1) en fonction de la vitesse d'avance ou de la distance parcourue par la fraiseuse (3) sur la voie de fraisage actuelle ou de la position de déchargement actuelle du moyen de transport (2).

**7.** Procédé selon l'une des revendications 1 à 6, **caractérisé par** la commande de la vitesse d'avance ou de la position actuelle du camion (1) de sorte que la position de déchargement du convoyeur au-dessus de l'au moins un récipient se déplace d'une position extrême avant ou arrière à l'intérieur du récipient à une position extrême opposée dans la direction longitudinale.

**8.** Fraiseuse (3), en particulier un appareil d'exploitation à ciel ouvert, comprenant une commande destinée à commander le processus de traitement lors du traitement de matériau fraisé d'une surface d'extraction à ciel ouvert (4) ou lors du fraisage de couches d'une surface de circulation en asphalte ou en béton et commander l'évacuation du matériau fraisé traité pour charger un camion (1), la fraiseuse (3)

   - traitant la surface du sol le long d'une voie de fraisage prédéterminée d'une longueur prédéterminée,
   - convoyant le matériau fraisé au moyen d'un convoyeur (2) vers au moins un récipient d'un camion (1), ayant un volume de charge maximal prédéterminé pour chaque charge, qui se déplace à côté de la fraiseuse (3) et
   - un camion entièrement chargé étant remplacé par un non chargé lorsque le volume de charge maximal d'un chargement de camion est atteint,

   **caractérisée en ce que**
   la commande (12)

   - calcule le volume de charge total maximum résultant de la longueur de la voie de fraisage actuelle en fonction de la largeur de traitement effective actuelle et d'une profondeur de fraisage optimisée par rapport à une performance de fraisage prédéterminée, de préférence maximale,
   - calcule le nombre de chargements de camion requis pour le volume de charge total maximum d'une voie de fraisage
   - détermine un volume de charge total effectif de la voie de fraisage actuelle résultant du nombre entier de chargement le plus proche, et
   - adapte le volume de fraisage total réglable de la fraiseuse (3) sur la longueur de la voie de fraisage au volume de charge total effectif qui donne un nombre entier de chargements.

**9.** Fraiseuse selon la revendication 8, **caractérisée en ce que** la commande (12) calcule le volume de charge total effectif, qui résulte du nombre entier inférieur le plus proche, pour régler et adapter le volume de fraisage total.

**10.** Fraiseuse selon la revendication 8 ou 9, **caractérisée en ce que** la commande modifie la profondeur de fraisage pour adapter le volume de fraisage total réglable au volume de charge effectif total spécifié.

**11.** Fraiseuse selon l'une des revendications 8 à 10, **caractérisée en ce que** la commande (12) régule le processus de chargement d'au moins un récipient en commandant la vitesse de roulement du camion (1) en fonction de la vitesse d'avance de la fraiseuse et de l'état de chargement mesuré du récipient.

**12.** Fraiseuse selon l'une des revendications 8 à 11, **caractérisée en ce que** la commande (12) commande la vitesse de roulement ou la position actuelle du camion en fonction de la vitesse d'avance ou de la distance parcourue par la fraiseuse sur la voie de fraisage actuelle ou de la position de déchargement actuelle du moyen de transport par rapport au camion.

13. Fraiseuse selon l'une des revendications 8 à 12, **caractérisée en ce que** la commande, commande la vitesse de roulement ou la position actuelle du camion de telle sorte que la position de déchargement du convoyeur au-dessus de l'au moins un récipient se déplace d'une position extrême avant ou arrière à l'intérieur du récipient à une position extrême opposée dans la direction longitudinale.

Fig.1

Fig.2

Fig.3

90°

3

1.900

Fig.4

16

18

20

21

**Fig.5**

22

24

**Fig.6**

$I_{min\ e,act}$

$I_{ramp,act}$

$I_{flat,act}$

$I_{ramp,act}$

$F_{T,act}$

**Fig.7**

28

26

30

26

32

**Fig.8**

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3049817 A